# EUROPEAN PATENT APPLICATION

(11) **EP 4 497 943 A1**
(43) Date of publication of application: **29.01.2025**
(21) Application number: 24187906.3
(22) Date of filing: 11.07.2024
(51) Int. Cl.: F03D 1/06

(54) **BLADE TAIL EDGE STRUCTURE, WIND TURBINE BLADE, AND WIND TURBINE GENERATOR SYSTEM**

(30) Priority: 25.07.2023 CN 202310921100
(71) Applicant: Sany Renewable Energy Co., Ltd., Beijing 102200 (CN)
(72) Inventor: Wang, Xuetao, Beijing, 102200 (CN)
(74) Representative: Puchberger & Partner Patentanwälte

(57) **Abstract**

The present application provides a blade tail edge structure, a wind turbine blade, and a wind turbine generator system. The blade tail edge structure includes a body and a plurality of teeth. The body includes a connecting end and a flow guide end. The plurality of teeth are distributed in a first direction at the flow guide end. Two tooth surfaces of each tooth that are arranged to face away from each other are respectively a first surface and a second surface, each of a central portion of the first surface and a central portion of the second surface protrudes to form a flow guide rib extending in a second direction, and a flow guide surface is formed on each of two sides of each flow guide rib in the first direction. Two flow guide surfaces located on the first surface both tilt toward the second surface in a direction away from the flow guide rib, and two flow guide surfaces located on the second surface both tilt toward the first surface in the direction away from the flow guide rib. In the present application, the flow guide rib is formed protruding from each of the second surface and the first surface of the tooth, and the flow guide surface is formed on each of two sides of each flow guide rib, so that the tooth can perform flow guide in both turbulent boundary layers of a suction surface and a pressure surface to reduce a jet generated at the tooth, so as to reduce noise generated at a blade, thereby improving a noise reduction effect.

## Description

### TECHNICAL FIELD

The present application relates to the field of wind power generation technologies, and in particular, to a blade tail edge structure, a wind turbine blade, and a wind turbine generator system.

### BACKGROUND

A main noise source of a wind turbine generator system is aerodynamic noise in a turbulent boundary layer of a tail edge of a blade. On the premise of losing no power generation, the most effective noise reduction technology is to mount a tooth tail edge at a tail edge.

A tail edge in the prior art is usually a tooth tail edge with both surfaces being planar surfaces, or a tooth tail edge with a pressure surface provided with a flow guide structure and a suction surface being a planar surface. For the tooth tail edge with both surfaces being planar surfaces, a small jet is formed between teeth, and a noise reduction effect is insufficient. For the tooth tail edge with the pressure surface provided with a flow guide structure and the suction surface being a planar surface, a flow guide function is only performed on a turbulent boundary layer of the suction surface, and a small jet is still generated on the suction surface, resulting in an insufficient noise reduction effect.

### SUMMARY OF THE INVENTION

A major objective of the present application is to provide a blade tail edge structure, a wind turbine blade, and a wind turbine generator system, to resolve the problem that an existing tooth tail edge has an insufficient noise reduction effect.

To achieve the foregoing objective, the present application provides a blade tail edge structure, including:
a body, where the body includes a connecting end and a flow guide end, and the connecting end is connected to a blade; and
a plurality of teeth, where the plurality of teeth are distributed in a first direction at the flow guide end, and a tooth space is formed between every two adjacent teeth,
where two tooth surfaces of each tooth that are arranged to face away from each other are respectively a first surface and a second surface, each of a central portion of the first surface and a central portion of the second surface protrudes to form a flow guide rib extending in a second direction, the first direction and the second direction are different from each other, and a flow guide surface is formed on each of two sides of each flow guide rib in the first direction; and two flow guide surfaces located on the first surface both tilt toward the second surface in a direction away from the flow guide rib, and two flow guide surfaces located on the second surface both tilt toward the first surface in the direction away from the flow guide rib.

Preferably, each flow guide surface extends in the second direction to form an arc-shaped extending portion toward a direction away from the flow guide rib corresponding to the flow guide surface; and for two adjacent teeth, the arc-shaped extending portion located on one tooth and the arc-shaped extending portion located on the other tooth arranged adjacent to said one tooth are arranged opposite to each other and joined with each other.

Preferably, the flow guide surface and the arc-shaped extending portion form a continuous curved surface, and the arc-shaped extending portion and the body have smooth transition therebetween.

Preferably, a tooth width of the tooth is arranged to gradually decrease in a direction away from the body, and an end of the tooth away from the body is arranged to be rounded.

Preferably, a ratio of a tooth height to a tooth width of the tooth ranges from 1.5 to 4.5; and the tooth height of the tooth is A, a chord length of the blade is B, and 0.1B < A < 0.2B.

Preferably, a mounting area is formed at the connecting end, the mounting area and the first surface are arranged on a same side, the mounting area includes an extending surface and a fitting surface, the extending surface is configured to be adapted and connected to a tail edge of the blade, and the fitting surface is configured to be adapted and fitted to a tail end of the blade.

The present application further provides a wind turbine blade, where the wind turbine blade includes a blade and the foregoing blade tail edge structure, the connecting end is connected to a tail edge of the blade, the first direction is a spanwise direction of the blade, and the second direction is a chord direction of the blade.

Preferably, the blade tail edge structure is mounted at a position of 40% to 99% on the blade in the spanwise direction.

Preferably, the plurality of teeth of the blade tail edge structure are located in a same horizontal plane, and an angle between the horizontal plane and a plane in which a tail edge of the blade is located is less than 7°.

The present application further provides a wind turbine generator system, where the foregoing wind turbine blade is used in the wind turbine generator system.

In the technical solution of the present application, the first surface of the tooth corresponds to a pressure surface of the blade, the second surface corresponds to a suction surface of the blade, a connecting end of the body is connected to the tail edge of the blade, and the tooth is located at the flow guide end, to be specific, located at a tip of the blade. The flow guide rib is formed protruding from each of the second surface and the first surface of the tooth, and the flow guide surface is formed on each of two sides of each flow guide rib, so that the tooth can perform flow guide in both a turbulent boundary layer of a pressure surface and a turbulent boundary layer of a suction surface to reduce a jet generated at the tooth, so as to reduce noise generated at a blade, thereby improving a noise reduction effect.

### BRIEF DESCRIPTION OF THE DRAWINGS

For clearer descriptions of the technical solutions in the embodiments of the present application or the prior art, the following briefly introduces the accompanying drawings required for describing the embodiments the prior art. Apparently, the accompanying drawings in the following description show merely some embodiments of the present application, and persons of ordinary skill in the art may still derive other drawings from the structure shown in these accompanying drawings without creative efforts.
FIG. 1 is a schematic structural diagram of a blade tail edge structure from a viewing angle according to an embodiment of the present application;
FIG. 2 is a schematic structural diagram of a blade tail edge structure from another viewing angle according to an embodiment of the present application;
FIG. 3 is a schematic structural side view of a blade tail edge structure according to an embodiment of the present application; and
FIG. 4 is a schematic structural diagram of a wind turbine blade according to the present application.

### Reference numerals:

| Numeral | Name | Numeral | Name |
|---|---|---|---|
| 1 | Blade tail edge structure | 21 | First surface |
| 10 | Body | 22 | Second surface |
| 11 | Connecting end | 23 | Flow guide rib |
| 12 | Flow guide end | 24 | Arc-shaped extending portion |
| 13 | Extending surface | 25 | Flow guide surface |
| 14 | Fitting surface | 30 | Blade |
| 20 | Tooth | | |

The realization of the objective, functional features, and advantages of the present application are further described with reference to the accompanying drawings in conjunction with the embodiments.

### DETAILED DESCRIPTION

The following clearly and completely describes the technical solutions in the embodiments with reference to the accompanying drawings in the embodiments. Apparently, the described embodiments are only some embodiments of the present application rather than all the embodiments. All other embodiments obtained by persons of ordinary skill in the art based on the embodiments of the present disclosure without creative efforts fall within the protection scope of the present disclosure.

It needs to be noted that all directional indications (such as up, down, left, right, front, back, rear, ...) in the embodiments are only used to explain a relative position relationship between movement states of parts in a specific posture (as shown in the figures). If the specific posture is changed, the directional indications are also changed correspondingly.

In addition, in the present application, description of "first", "second", and the like are used only for description, but are not intended to indicate or imply relative importance or implicitly specify a quantity of indicated technical features. Therefore, a feature limited by "first" or "second" may explicitly or implicitly include at least one feature. In the description of the present application, the term "plurality of" means at least two, for example, two, three, or the like, unless specifically and specifically limited otherwise.

In the present application, unless otherwise expressly specified and defined, "connected", "fixed", and the like should be understood in a broad sense, for example, "fixed" may be fixedly connected, detachably connected or integrally connected; or mechanically connected or electrically connected; or connected directly or indirectly through an intermediate, or two elements communicated internally or two elements having mutual effects, unless otherwise clearly specified. A person of ordinary skill in the art may understand specific meanings of the foregoing terms in the present application according to specific cases.

In addition, the technical solutions between the various embodiments of the present application can be combined with each other based on that a combination can be implemented by a person of ordinary skill in the art. When a combination of technical solutions encounters a contradiction or cannot be implemented, it should be considered that this combination of technical solutions does not exist and does not fall within the scope of protection that the present application seeks to protect. It should be understood that the specific embodiments described herein are merely used to describe the present application rather than limiting the present application.

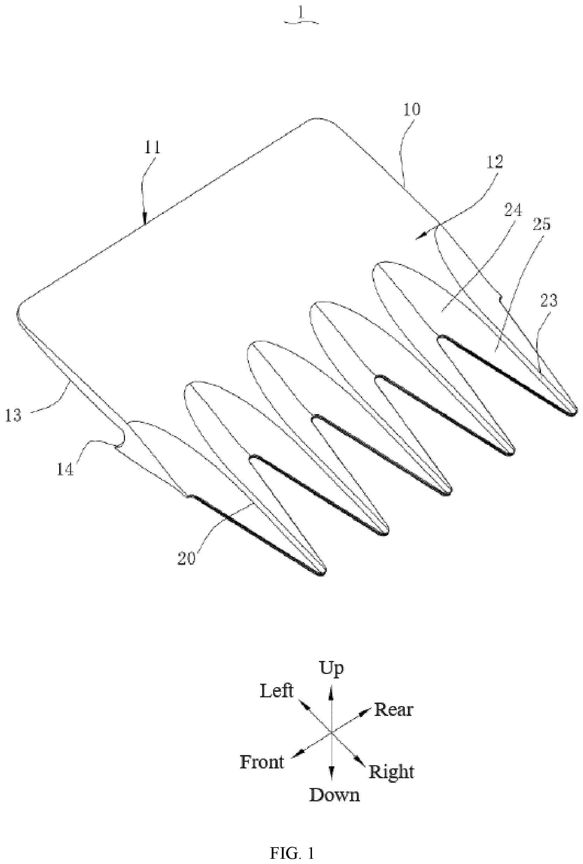

The description of orientations such as "up", "down", "front", "rear", "left", and "right" in the present application uses the orientations shown in FIG. 1 as a reference, and are only used to explain a relative position relationship between parts in the posture shown in FIG. 1. If the specific posture is changed, the directional indications are also changed correspondingly.

The present application provides a blade tail edge structure 1.

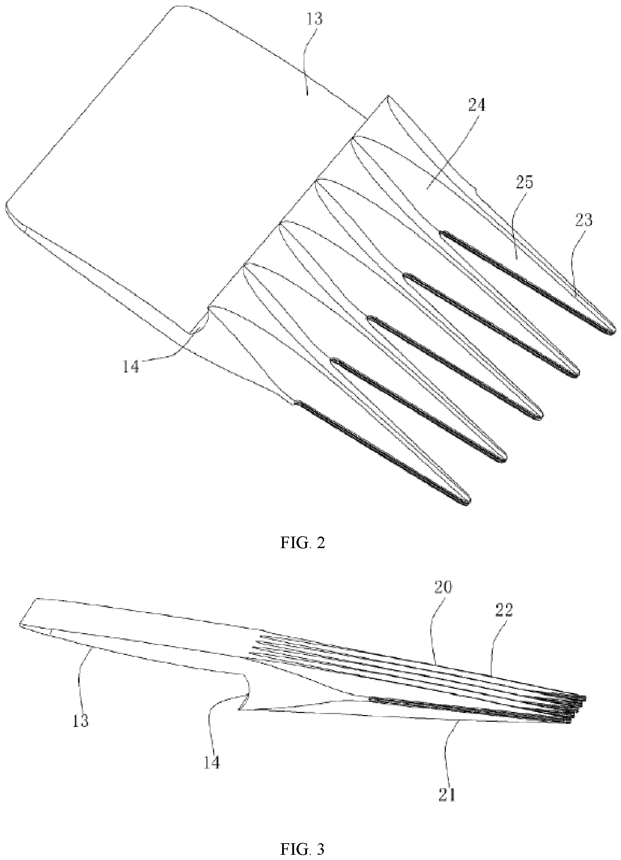

With reference to FIG. 1, FIG. 2, and FIG. 3, the blade tail edge structure 1 in this embodiment includes a body 10 and a plurality of teeth 20. The body 10 includes a connecting end 11 and a flow guide end 12, and the connecting end 11 is connected to a blade. The plurality of teeth 20 are distributed in a first direction at the flow guide end 12, and a tooth space is formed between every two adjacent teeth 20. Two tooth surfaces of each tooth 20 that are arranged to face away from each other are respectively a first surface 21 and a second surface 22, each of a central portion of the first surface 21 and a central portion of the second surface 22 protrudes to form a flow guide rib 23 extending in a second direction, the first direction and the second direction are different from each other, and a flow guide surface 25 is formed on each of two sides of each flow guide rib 23 in the first direction. Two flow guide surfaces 25 located on the first surface 21 both tilt toward the second surface 22 in a direction away from the flow guide rib 23, and two flow guide surfaces 25 located on the second surface 22 both tilt toward the first surface 21 in the direction away from the flow guide rib 23.

As shown in FIG. 1, the first direction is a longitudinal direction, to be specific, a width direction of the tooth 20. The second direction is a transverse direction, to be specific, a length direction of the tooth 20. It needs to be noted that the first surface 21 and the second surface 22 of the tooth 20 respectively correspond to a pressure surface and a suction surface of the blade.

In the technical solution of the present application, the first surface 21 of the tooth 20 corresponds to the pressure surface of the blade, the second surface 22 corresponds to the suction surface of the blade, the connecting end 11 of the body 10 is connected to a tail edge of the blade, and the tooth 20 is located at the flow guide end 12, to be specific, located at a tip of the blade. The flow guide rib 23 is formed protruding from each of the second surface 22 and the first surface 21 of the tooth 20, and the flow guide surface 25 is formed on each of two sides of each flow guide rib 23, so that the tooth 20 can perform flow guide in both a turbulent boundary layer of a pressure surface and a turbulent boundary layer of a suction surface to reduce a jet generated at the tooth 20, so as to reduce noise generated at a blade, thereby improving a noise reduction effect.

In an embodiment, each flow guide surface 25 extends in the second direction to form an arc-shaped extending portion 24 toward a direction away from the flow guide rib 23 corresponding to the flow guide surface 25. For two adjacent teeth 20, the arc-shaped extending portion 24 located on one tooth 20 and the arc-shaped extending portion 24 located on the other tooth 20 arranged adjacent to said one tooth 20 are arranged opposite to each other and joined with each other. The flow guide surface 25 extends leftward, and bends in the direction away from the flow guide rib 23 corresponding to the flow guide surface 25 to extend to form the arc-shaped extending portion 24. The arc-shaped extending portion 24 is also a part of the flow guide surface 25, and is implemented as a downward depression in a surface of the tooth 20. Two joined arc-shaped extending portions 24 may be seen as a U-shaped depression formed between two teeth 20. The separation and vortices of airflow cause noise and vibration of the blade. The overall depressed shape of the flow guide surface 25 can improve the flow of airflow at the tail edge, and reduce the generation of separation and vortices, so as to reduce the generation of noise and vibration, thereby improving the working stability and the noise reduction performance of the blade.

Specifically, the flow guide surface 25 and the arc-shaped extending portion 24 form a continuous curved surface, and the arc-shaped extending portion 24 and the body 10 have smooth transition therebetween. When the flow guide surface 25 and the arc-shaped extending portion 24 have a smooth continuous curved surface and the arc-shaped extending portion 24 and the body 10 have gradual smooth transition therebetween, so that unevenness or the like on the flow guide surface 25 and the arc-shaped extending portion 24 can be reduced to avoid the generation of turbulence, thereby reducing the resistance of airflow, and an airflow separation phenomenon can be reduced to reduce the generation of noise and vibration, thereby improving the noise reduction performance of the blade. In addition, with the smooth continuous curved surface, precise control of a flow guide direction is implemented more easily, to reduce the generation of noise and vibration, thereby improving the working stability and the noise reduction performance of the blade.

Further, a tooth width of the tooth 20 is arranged to gradually decrease in a direction away from the body 10, and an end of the tooth 20 away from the body 10 is arranged to be rounded. A width of the tooth 20 is arranged to gradually decrease in the direction away from the body 10. To be specific, the tooth 20 is a triangle with a tip facing an end away from the body 10. The shape of the tooth can scatter and mitigate noise generated from airflow separation, thereby improving the noise reduction performance of the blade. In addition, the flow characteristics and resistance distribution of airflow can be further improved. The teeth 20 can reduce the generation of separation and vortices of airflow and improve the stability and streamlining of airflow, so as to improve the aerodynamic performance and efficiency of the blade. The sharp tip of the teeth 20 can better control the formation of separation and vortices of airflow, thereby further reducing noise and improving the aerodynamic performance.

Specifically, a ratio of a tooth height to a tooth width of the tooth 20 ranges from 1.5 to 4.5; and the tooth height of the tooth 20 is A, a chord length of the blade is B, and 0.1B < A < 0.2B. When the ratio of the tooth height to the tooth width of the tooth 20 ranges from 1.5 to 4.5 and the tooth height of the tooth 20 ranges from 10% to 20% of the chord of the blade, jets, turbulence, and eddies generated at the tail edge of the blade are minimized, thereby minimizing noise generated at the tail edge of the blade.

Specifically, a mounting area is formed at the connecting end 11, the mounting area and the first surface 21 are arranged on a same side, the mounting area includes an extending surface 13 and a fitting surface 14, the extending surface 13 is configured to be adapted and connected to a tail edge of the blade, and the fitting surface 14 is configured to be adapted and fitted to a tail end of the blade. A connecting end is fitted to the second surface 22 of the blade through the extending surface 13, and the tail edge of the blade is fitted to the fitting surface 14. At the fitting surface 14, the blade is fixed to the extending surface 13 and the fitting surface 14 through an adhesive. The extending surface 13 helps to increase the stability of the connection between the blade and the blade tail edge structure 1. The fitting surface 14 helps to make the fitting between the blade and the blade tail edge structure 1 tighter, and a gap is avoided, thereby improving the stability of the connection between the blade and the blade tail edge structure 1.

Specifically, a length of the extending surface 13 in the second direction ranges from 70 mm to 90 mm. The length of the extending surface 13 ranges from 70 mm to 90 mm, and is preferably 80 mm, so that while the stability of the connection between the blade tail edge structure 1 and the blade is ensured, the size of the blade tail edge structure 1 is reduced, thereby reducing material costs.

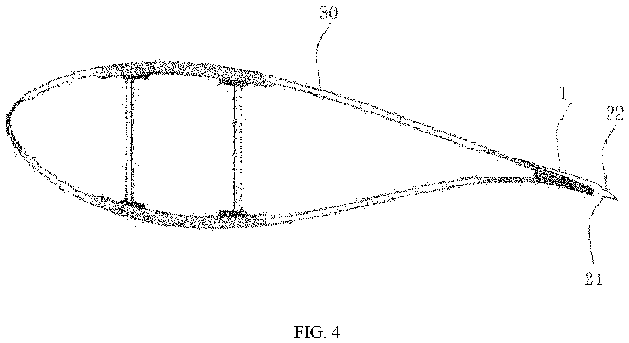

Referring to FIG. 4, the present application further provides a wind turbine blade. The wind turbine blade includes a blade 30 and the foregoing blade tail edge structure 1, the connecting end 11 is connected to a tail edge of the blade, the first direction is a spanwise direction of the blade 30, and the second direction is a chord direction of the blade 30. For a specific structure of the blade tail edge structure 1, refer to the foregoing embodiments. Because all technical solutions in all the foregoing embodiments are used in the wind turbine blade, at least all beneficial effects brought by the technical solutions of the foregoing embodiments are provided, and details are not described again herein.

In an embodiment, the blade tail edge structure 1 is mounted at a position of 40% to 99% on the blade 30 in the spanwise direction . A direction from a blade root to a blade tip of the blade 30 is the spanwise direction. The blade tail edge structure 1 is mounted at a position of 40% to 99% on the blade in the spanwise direction, that is, a position of 1% to 60% from the blade root to the blade tip, so that the blade tail edge structure 1 does not affect the performance of the blade 30.

It needs to be noted that the blade 30 and the blade tail edge structure 1 may be bonded through an adhesive, or may be integrally arranged. When the blade 30 and the blade tail edge structure 1 are integrally formed, the structure thereof is more stable and has a higher bearing capability.

In an embodiment, the plurality of teeth 20 of the blade tail edge structure 1 are located in a same horizontal plane, and an angle between the horizontal plane and a plane in which a tail edge of the blade 30 is located is less than 7°. When the blade tail edge structure 1 and the teeth 20 are located in the same horizontal plane, the guide effect of airflow is optimal. In addition, when the angle between the horizontal plane and the tail edge of the blade is ±7°, the teeth have the lowest impact on the performance of the blade.

The present application further provides a wind turbine generator system. The foregoing wind turbine blade is used in the wind turbine generator system. For a specific structure of the wind power blade, refer to the foregoing embodiments. Because all technical solutions in all the foregoing embodiments are used in the wind turbine blade, at least all beneficial effects brought by the technical solutions of the foregoing embodiments are provided, and details are not described again herein.

The above is only preferred embodiments of the present application and is not intended to limit the scope of the patent of the present application. Any equivalent structure or equivalent procedure transformation using the content of the specification of the present application and the accompanying drawings, or any direct or indirect application in other related technical fields, similarly falls within the scope of protection of the patent of the present application.

## Claims

1. A blade tail edge structure (1), comprising:
a body (10), wherein the body (10) comprises a connecting end (11) and a flow guide end (12), and the connecting end (11) is connected to a blade; and
a plurality of teeth (20), wherein the plurality of teeth (20) are distributed in a first direction at the flow guide end (12), and a tooth space is formed between every two adjacent teeth (20),
wherein two tooth surfaces of each tooth (20) that are arranged to face away from each other are respectively a first surface (21) and a second surface (22), each of a central portion of the first surface (21) and a central portion of the second surface (22) protrudes to form a flow guide rib (23) extending in a second direction, the first direction and the second direction are different from each other, and a flow guide surface (25) is formed on each of two sides of each flow guide rib (23) in the first direction; and two flow guide surfaces (25) located on the first surface (21) both tilt toward the second surface (22) in a direction away from the flow guide rib (23), and two flow guide surfaces (25) located on the second surface (22) both tilt toward the first surface (21) in the direction away from the flow guide rib (23).

2. The blade tail edge structure (1) according to claim 1, wherein each flow guide surface (25) extends in the second direction to form an arc-shaped extending portion (24) toward a direction away from the flow guide rib (23) corresponding to the flow guide surface (25); and for two adjacent teeth (20), the arc-shaped extending portion (24) located on one tooth (20) and the arc-shaped extending portion (24) located on the other tooth (20) arranged adjacent to said one tooth (20) are arranged opposite to each other and joined with each other.

3. The blade tail edge structure (1) according to claim 2, wherein the flow guide surface (25) and the arc-shaped extending portion (24) form a continuous curved surface, and the arc-shaped extending portion (24) and the body (10) have smooth transition therebetween.

4. The blade tail edge structure (1) according to claim 1, wherein a tooth width of the tooth (20) is arranged to gradually decrease in a direction away from the body (10), and an end of the tooth (20) away from the body (10) is arranged to be rounded.

5. The blade tail edge structure (1) according to claim 1, wherein a ratio of a tooth height to a tooth width of the tooth (20) ranges from 1.5 to 4.5; and the tooth height of the tooth (20) is A, a chord length of the blade is B, and 0.1B < A < 0.2B.

6. The blade tail edge structure (1) according to any one of claims 1 to 5, wherein a mounting area is formed at the connecting end (11), the mounting area and the first surface (21) are arranged on a same side, the mounting area comprises an extending surface (13) and a fitting surface (14), the extending surface (13) is configured to be adapted and connected to a tail edge of the blade, and the fitting surface (14) is configured to be adapted and fitted to a tail end of the blade.

7. A wind turbine blade, wherein the wind turbine blade comprises a blade and the blade tail edge structure (1) according to any one of claims 1 to 6, the connecting end (11) is connected to a tail edge of the blade, the first direction is a spanwise direction of the blade, and the second direction is a chord direction of the blade.

8. The wind turbine blade according to claim 7, wherein the blade tail edge structure (1) is mounted at a position of 40% to 99% on the blade in the spanwise direction.

9. The wind turbine blade according to claim 7, wherein the plurality of teeth (20) of the blade tail edge structure (1) are located in a same horizontal plane, and an angle between the horizontal plane and a plane in which a tail edge of the blade is located is less than 7°.

10. A wind turbine generator system, wherein the wind turbine blade according to any one of claims 7 to 9 is used in the wind turbine generator system.
